# FASCICULE DE BREVET EUROPEEN

(11) **EP 2 528 786 B1**
(45) Date de publication et mention de la délivrance du brevet: **16.12.2015**
(21) Numéro de dépôt: 10809302.2
(22) Date de dépôt: 20.12.2010
(51) Int. Cl.: B60S 1/38

(54) **VERROU INTEGRE SUR CONNECTEUR DE BRAS D'ESSUYAGE POUR RAMPE DE LAVAGE EMBARQUEE**
IN EINEN VERBINDER EINES WISCHERARMS FÜR EINE FAHRZEUGSEITIGE WASCHLEITUNG EINGEBAUTE SCHRAUBE
BOLT BUILT INTO A CONNECTOR OF A WIPER ARM FOR AN ON-BOARD WASHING LINE

(30) Priorité: 25.01.2010 FR 1050447
(43) Date de publication de la demande: 05.12.2012
(73) Titulaire: Peugeot Citroen Automobiles S.A., 78140 Vélizy Villacoublay (FR)
(72) Inventeur: GUIDEZ, Frédéric, F-59400 Cambrai (FR)
(86) Numéro de dépôt international: PCT/FR2010/052825
(87) Numéro de publication internationale: WO 2011/089331

(56) Documents cités:
- WO-A1-2010/006775
- WO-A1-2010/006776
- DE-A1-102007 062 304
- DE-A1-102008 021 457
- US-A- 2 582 717

## Description

La présente invention concerne de manière générale un dispositif d'essuie-glace comprenant un balai d'essuie-glace articulé sur un bras d'essuie-glace par l'intermédiaire d'un connecteur bras-balai, et plus particulièrement, un dispositif d'essuie-glace comprenant un dispositif de projection de liquide de lavage agencé sur le balai d'essuie-glace. La présente invention s'applique notamment au domaine de l'automobile.

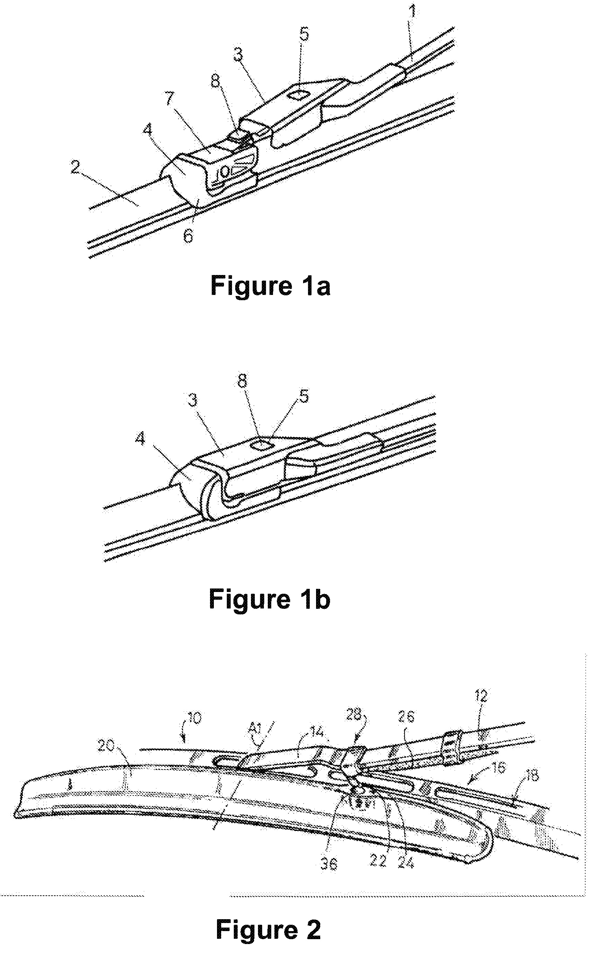

L'essuyage du pare-brise d'un véhicule est communément réalisé par des bras munis de balais qui parcourent la surface vitrée du pare-brise. Sur la figure 1a est représenté un bras d'essuie-glace 1 déconnecté d'avec son balai d'essuie-glace 2. Pour assurer la connexion entre le bras et le balai, il est prévu un connecteur bras-balai comprenant une première partie 3 solidaire du bras et une deuxième partie 4 solidaire du balai. Une des parties du connecteur bras-balai est un élément femelle tandis que l'autre partie du connecteur est un élément mâle de sorte à ce que l'assemblage des deux parties permette de former le bras de balai de l'essuie-glace. La première partie 3, femelle, est creuse et munie sur une des ses faces d'une ouverture 5. La deuxième partie 4, mâle, comprend une partie fixe 6 solidaire du balai 2 et une partie mobile 7 venant s'emboîter dans la partie femelle et munie d'une bascule 8 destinée à coopérer avec l'ouverture 5 pour verrouiller les deux parties mâle et femelle ensemble assurant la connexion bras-balai. La figure 1b représente justement le connecteur bras-balai après connexion des deux parties mâle 4 et femelle 3 ensemble. La bascule 8 de la partie mâle est alors positionnée dans l'ouverture 5 de la partie femelle.

Le lavage du pare-brise est communément réalisé par des gicleurs spécifiques. Cependant, certains systèmes récents proposent un lavage intégré directement dans le balai d'essuyage. Ce type de lavage permet, notamment, de réduire la consommation de liquide lave-glace, ainsi que d'obtenir une meilleure efficacité d'essuyage. Un tel exemple est connu en particulier du document EP 0 810 133 présentant un dispositif d'essuie-glace. La figure 2 représente un balai d'essuie-glace 16 articulé autour d'un axe de rotation transversal A1 à l'extrémité libre 14 d'un bras d'essuie-glace. Le balai porte un dispositif de projection de liquide de lavage 20 qui est relié par une canalisation 26 à un dispositif d'alimentation en liquide de lavage, la canalisation 26 s'étendant le long du bras d'essuie-glace 12. Le bras et le balai sont articulés l'un par rapport à l'autre autour de l'axe transversal A1 par l'intermédiaire d'un dispositif de connexion non représenté. La canalisation 26 et le dispositif de projection 20 sont reliés par un raccord 28 qui comporte une partie solidaire du bras 12 et une partie 36 solidaire du balai 16, les deux parties du raccord 28 étant raccordées automatiquement par pivotement du balai 16 autour de son axe de rotation A1 par rapport au bras 12. Le raccord 28 a pour objectif de garantir l'alimentation du dispositif de projection de liquide de lavage tant qu'au moins un tronçon de l'embout est reçu à l'intérieur de la cavité 36. Il est donc nécessaire de prévoir un embout dont la dimension soit suffisante par rapport aux variations de l'inclinaison relative entre le balai 16 et le bras 12 lorsque l'essuie-glace se déplace dans son mouvement de balayage de la vitre. Toutefois, afin de limiter la longueur de l'embout, on a intérêt à disposer le raccord 28 au plus près de l'extrémité libre 14 du bras 12.

Un dispositif d'essuie-glace avec dispositif de projection intégré tel que défini dans le document EP 0 810 133 présente néanmoins un certain nombre d'inconvénients. En effet, le bras et le balai étant vus comme deux pièces distinctes, il est généralement prévu que le bras reste sur le véhicule durant toute la vie du véhicule tandis que le balai d'essuyage est une pièce d'usure qui a besoin d'être changé régulièrement. Lors des opérations de changement d'un balai usagé, l'utilisateur devra dans un premier temps monter le balai sur le bras autour de l'axe de rotation par l'intermédiaire du mécanisme de connexion prévu à cet effet au niveau de l'extrémité libre 14 du bras. Dans le même temps, il devra s'assurer de l'orientation exacte de la partie du raccord solidaire du bras pour venir effectuer le raccordement par rotation du balai autour de son axe. Tout décalage entre l'embout 34 et la cavité pouvant entraîner des difficultés de montage du raccord. En outre, soit le raccord est éloigné de l'axe de rotation et dans ce cas l'embout 34 doit être relativement long rendant son orientation moins précise et donc son insertion plus difficile dans la cavité 36, soit le raccord est disposé à proximité de l'axe de rotation et dans ce cas l'embout 34 peut être plus court mais sera en conséquence plus rigide nécessitant alors une orientation très précise pour assurer une insertion aisée dans la cavité 36. Enfin, le principe d'un raccord mobile dans le cadre de son utilisation, par pivotement de l'embout dans la cavité, présente une usure mécanique accélérée des parties concernées, y compris côté bras, ainsi que des risques de détachement ou de fuite de liquide entre les deux parties.

On connaît également du document DE102008021457, un essuie-glace de véhicule conforme au préambule de la revendication 1.

Un but de la présente invention est de répondre aux différents inconvénients des documents de l'art antérieur mentionnés ci-dessus et en particulier, tout d'abord, de fournir un dispositif d'essuie-glace avec dispositif de projection intégré simple, robuste et fiable.

Pour cela un premier aspect de l'invention concerne un essuie-glace de véhicule automobile conforme à l'objet de la partie caractérisante de la revendication 1.

Un tel système permet de renforcer la robustesse du dispositif de raccord et prévenir tout risque de détachement entre le dispositif de projection et le canal d'acheminement.

Selon la présente invention la bascule présente une forme d'épingle comprenant une zone supérieure d'ouverture large pour permettre le passage de la première partie du dispositif de raccord en forme de tête et une zone inférieure d'ouverture étroite pour empêcher le passage de cette même première partie du dispositif de raccord. Une telle bascule est mobile entre une position haute et une position basse. Dans la position basse, la bascule permet de laisser passer la tête du dispositif de raccord lors de la connexion du connecteur bras-balai. Dans la position haute, la bascule permet de verrouiller le dispositif de raccord lorsque la tête a traversé la bascule après connexion du connecteur bras-balai.

Selon un autre mode de réalisation avantageux, la première partie du dispositif de raccord en forme de tête est apte à venir se loger dans la deuxième partie du dispositif de raccord en forme d'embouchure. Avantageusement, un joint torique est disposé dans l'embouchure.

Selon un deuxième aspect, la présente invention concerne un véhicule automobile équipé d'un essuie-glace selon l'un quelconque des modes de réalisation du premier aspect de l'invention.

D'autres caractéristiques et avantages de la présente invention apparaîtront plus clairement à la lecture de la description détaillée qui suit de modes de réalisation de l'invention donnés à titre d'exemples nullement limitatifs et illustrés par le dessin annexé, dans lequel :
- La figure 1a représente une vue en perspective d'un connecteur bras-balai en position non connectée selon l'art antérieur ;
- la figure 1b représente une vue en perspective du connecteur bras-balai de la figure 1a en position connectée selon l'art antérieur ;
- la figure 2 représente une vue d'un dispositif d'essuie-glace incorporant un dispositif de projection selon l'art antérieur.
- la figure 3 représente une vue schématique en perspective d'un connecteur bras-balai incorporant un raccord selon un mode de réalisation de l'invention ;
- la figure 4 représente une vue du connecteur bras-balai dans une position déconnectée selon un mode de réalisation préféré de l'invention ;
- la figure 5 représente une vue du connecteur bras-balai dans une position connectée ;
- la figure 6 représente une vue du connecteur selon la coupe A-A de la figure 5 ;
- la figure 7 représente une vue du connecteur bras-balai dans une position connectée en cours de fonctionnement du dispositif de projection ;
- la figure 8 représente une vue du connecteur bras-balai lors de l'étape de déconnexion ;
- la figure 9 représente une vue du connecteur selon la coupe B-B de la figure 8 ;
- la figure 10 représente une vue du connecteur bras-balai lors de la suite de l'étape de déconnexion ;
- la figure 11 représente une vue du connecteur selon la coupe C-C de la figure 10.

Un des buts principaux de la présente invention est de pouvoir réaliser la connexion et la déconnexion d'un balai d'essuie-glace équipé d'un dispositif de projection, comme par exemple une rampe de lavage, en une seule opération manuelle simple fiable et robuste au lieu de deux.

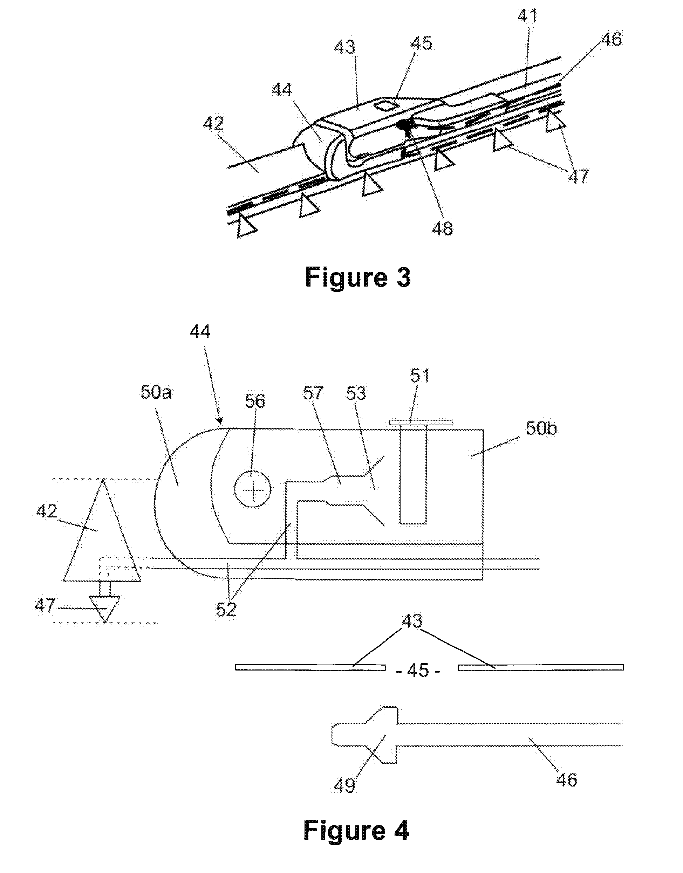

Pour cela, partant d'un connecteur bras-balai rapide représenté à la figure 3 similaire à celui présenté aux figures 1a et 1b, il est prévu d'y intégrer un dispositif de raccord permettant de relier le canal d'acheminement intégré au bras à celui relié au balai et ainsi alimenté le dispositif de projection monté sur le balai. On retrouve sur cette figure 3, un balai d'essuie-glace 42 monté sur un bras d'essuie-glace 41 au moyen d'un connecteur bras-balai comprenant une première partie 43 solidaire du bras et une deuxième partie 44 solidaire du balai. Un canal d'acheminement 46 associé au bras 41 est relié à un dispositif d'alimentation en liquide de lavage (non représenté) venant alimenter un ou plusieurs dispositifs de projection de liquide de lavage 47 agencés sur le balai. Le dispositif de projection est relié au canal d'acheminement 46 du bras par l'intermédiaire d'un dispositif de raccord 48 intégré au connecteur bras-balai.

Dans la suite de la présente description, nous étudierons un mode de réalisation avantageux du dispositif de raccord intégré au connecteur bras-balai. Tout d'abord, on se référera à la figure 4 représentant une vue du connecteur bras-balai dans une position où les parties liées au bras (non visible) d'une part et au balai 42 d'autre part sont déconnectées. Le connecteur bras-balai comprend une première partie 43 solidaire du bras à l'intérieur de laquelle est intégré le canal d'acheminement 46. La première partie 43, choisie femelle, est creuse et munie sur une des ses faces d'une ouverture 45. Le canal d'acheminement 46 comprend à son extrémité située à l'intérieur du connecteur bras-balai côté bras, une tête 49 destinée à venir s'emboîter dans une embouchure correspondante côté balai.

Le connecteur bras-balai comprend une deuxième partie 44, choisie mâle, solidaire du balai 42. Cette deuxième partie comprend une partie fixe 50a et une partie mobile 50b rattachée à la partie fixe autour d'un axe de rotation 56 et venant s'emboîter dans la partie femelle 43 du connecteur bras-balai solidaire du bras. Cette partie mobile 50b est munie d'une bascule 51 destinée à coopérer avec l'ouverture 45 pour verrouiller les deux parties mâle et femelle ensemble assurant la connexion bras-balai. A l'intérieur de la deuxième partie 44 du connecteur bras-balai a été intégré une partie 57 du dispositif de raccord avec le canal d'acheminement 46, sous forme d'un canal de raccord 52 relié aux dispositifs de projection 47 agencés sur le balai, et dont l'extrémité opposée présente une embouchure 53 destinée à accueillir la tête 49 du canal d'acheminement.

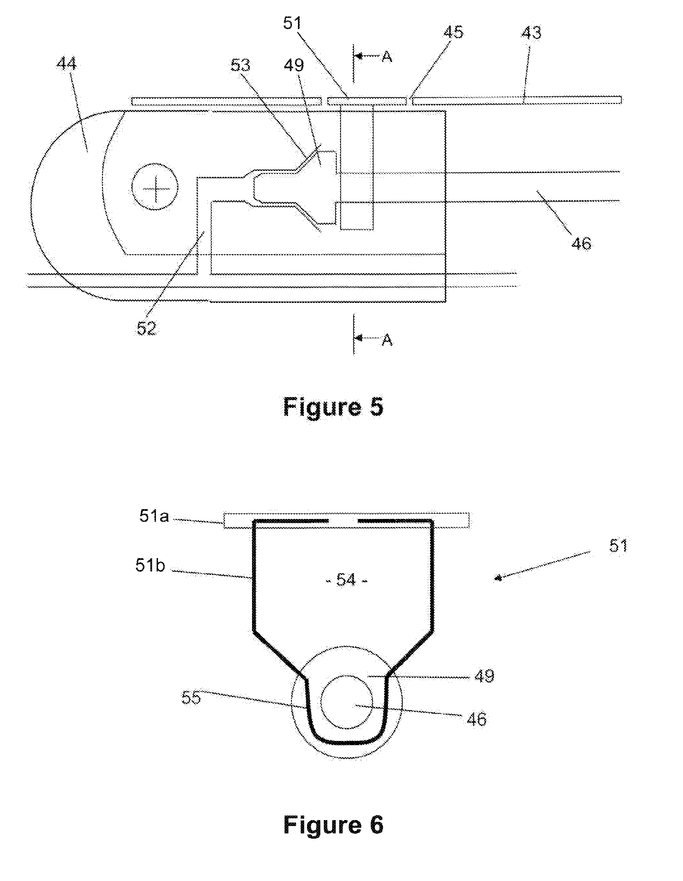

La figure 5 représente une vue du connecteur bras-balai dans une position dans laquelle le connecteur bras-balai est assemblé, la première partie 43 solidaire du bras ayant été connectée avec la deuxième partie 44 solidaire du balai. Sur cette figure, on s'aperçoit que la bascule 51 est venue se loger dans l'ouverture 45 tandis que dans le même temps la tête 49, partie mâle du dispositif de raccord, est venue se loger automatiquement dans l'embouchure 53, partie femelle du dispositif de raccord, permettant ainsi d'alimenter le dispositif de projection avec du liquide de lavage. Pour assurer une parfaite étanchéité du dispositif de raccord, il est avantageusement prévu de disposer un joint torique (non représenté) dans l'embouchure 53.

Pour arriver dans cette position encliquetée, l'utilisateur doit pousser le balai (non visible sur cette figure) dans le sens du bras (également non représenté) pour assembler le balai sur le bras. Il n'y a besoin d'aucune pression sur la bascule 51. Sous la poussée, les canaux d'acheminement 46 et de raccord 52 s'assemblent grâce au dispositif de raccord rapide (embouchure et tête) prévu à cet effet. Dans le même temps, sous la poussée, le balai s'assemble sur le bras grâce au connecteur bras-balai prévu à cet effet, par assemblage des deux parties mâles 43 et femelle 44 du connecteur.

La figure 6 représente une vue du connecteur selon la coupe A-A de la figure 5. Sur cette figure, il apparaît que la bascule 51 présente avantageusement un plateau 51a et une partie inférieure 51 b en forme d'épingle présentant une zone supérieure 54 d'ouverture large et une zone inférieure 55 d'ouverture étroite. Ainsi, lors de la poussée du balai vers le bras, la tête 49 du canal d'acheminement passe au travers de la zone supérieure 54 d'ouverture large de la bascule, puis lorsque la tête 49 a traversé complètement la bascule 51, cette dernière peut venir se loger dans l'ouverture 45 de la partie femelle 43 du connecteur bras-balai, remontant d'un cran de sorte que la tête se trouve alors en face de l'ouverture inférieure 55 d'ouverture étroite. Dans cette position, la tête 49 dans laquelle est intégré l'extrémité du canal d'acheminement 46 est verrouillée par la bascule 51 et reste donc en position dans l'embouchure.

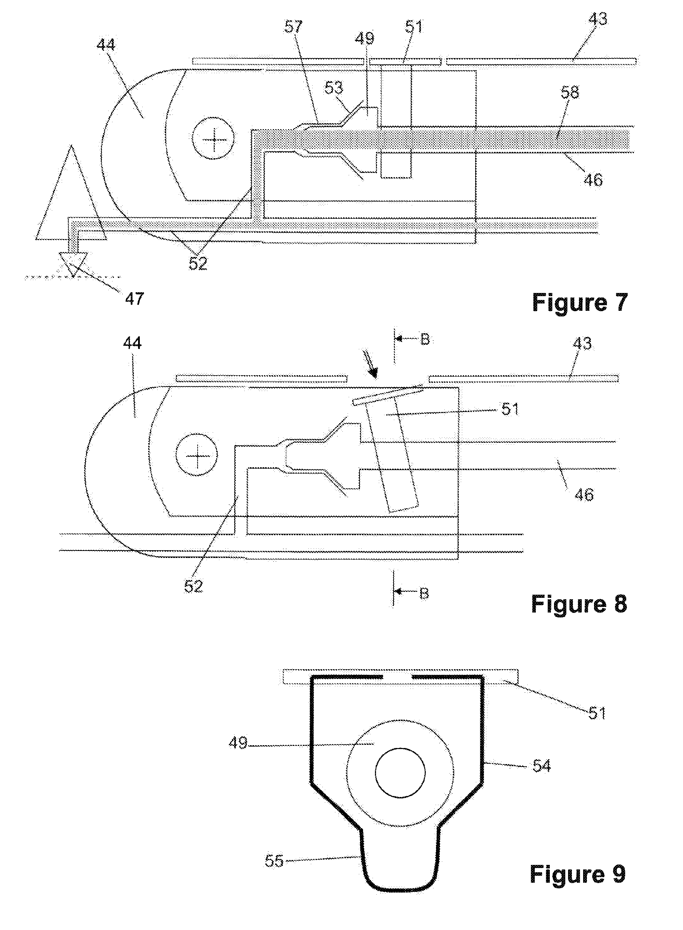

La figure 7 représente une vue du connecteur bras-balai dans sa position connectée, le dispositif de projection étant en cours de fonctionnement. Le liquide de lavage 58 est acheminé depuis un réservoir (non représenté) situé sur le véhicule par l'intermédiaire du canal d'acheminement 46 jusqu'au dispositif de raccord (embouchure 53 et tête 49) automatiquement verrouillé par la bascule 51 lors de la connexion du connecteur bras-balai (parties mâle 43 et femelle 44), puis de ce dispositif de raccord jusqu'au dispositif de projection 47 soit directement soit par l'intermédiaire d'un canal de raccord 52.

La figure 8 représente une vue du connecteur bras-balai lors de sa déconnexion. Pour ce faire, l'utilisateur doit presser sur le système qui permet de séparer le bras et le balai, à savoir la bascule 51. Suite à cette pression, la bascule s'enfonce en basculant de sorte à libérer la partie mâle 43 du connecteur bras-balai de la partie femelle 44. Dans le même temps, comme cela est représenté sur la coupe B-B (figure 9), l'enfoncement de la bascule entraîne un déplacement des zones d'ouverture 54 et 55 par rapport au dispositif de raccord, de sorte que la tête 49 se trouve positionner vis-à-vis de la zone supérieure 55 d'ouverture large. Ainsi, le dispositif de raccord rapide est en position ouverte, i.e. non verrouillée par la bascule, de sorte que les canaux d'acheminement 46 et de raccord 52 sont libérables.

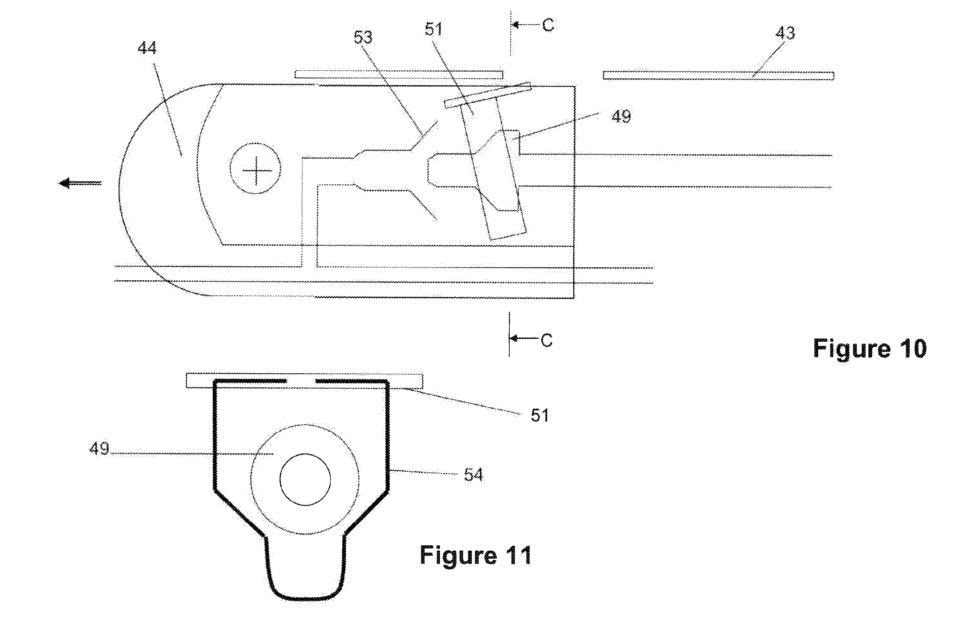

La figure 10 représente une vue du connecteur bras-balai lors de la suite de sa déconnexion par l'utilisateur. Pour cela, l'utilisateur doit simplement tirer sur le balai dans le sens opposé au bras pour séparer d'une part le balai du bras et d'autre part le dispositif de projection du canal d'acheminement. On remarque sur cette figure que la bascule n'étant plus logée dans l'ouverture 45, les parties mâle et femelle 43, 44 du connecteur bras-balai peuvent être désolidarisées, désolidarisant de ce fait le balai du bras, tandis que dans le même temps, la tête 49 automatiquement passe au travers de la zone supérieure 54 d'ouverture large de la bascule 51 telle que représentée sur la coupe C-C (figure 11).

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, la présente invention a été présentée sur la base d'une connexion bras-balai de type baïonnette, bien qu'il soit possible d'envisager un système automatique de connexion simultanée du balai sur le bras et du dispositif de projection avec le réservoir de liquide de lavage avec d'autres types de connecteur bras-balai.

## Revendications

1. Essuie-glace de véhicule automobile comportant un balai d'essuie-glace (42) articulé sur un bras d'essuie-glace (41) par l'intermédiaire d'un connecteur bras-balai comprenant une première partie (43) solidaire du bras (41) et une deuxième partie (44) solidaire du balai (42), et un dispositif de projection (47) de liquide de lavage agencé sur le balai d'essuie-glace et relié par l'intermédiaire d'un dispositif de raccord (49, 53, 57) à un canal d'acheminement (46) de liquide de lavage s'étendant au moins en partie le long du bras d'essuie-glace, dans lequel le dispositif de raccord est intégré au connecteur bras-balai pour raccorder automatiquement le dispositif de projection avec le canal d'acheminement lors de la connexion du balai d'essuie-glace sur le bras d'essuie-glace et détacher automatiquement le dispositif de projection d'avec le canal d'acheminement lors de la déconnexion du balai d'essuie-glace d'avec le bras d'essuie-glace, ledit dispositif de raccord (57) comprenant une première partie (49) solidaire du bras intégrée à la première partie du connecteur bras-balai, et une deuxième partie (53) solidaire du balai, intégrée à la deuxième partie du connecteur bras-balai, rendant le dispositif de raccord solidaire du connecteur bras-balai, (43, 44, 45, 51), et dans lequel la première partie (43) du connecteur bras-balai comprend une ouverture (45) et la deuxième partie (44) du connecteur bras-balai est munie d'une bascule (51) apte à être positionnée dans ladite ouverture pour assurer la connexion entre le bras (41) et le balai (42), ladite bascule est utilisée comme verrou des première (49) et deuxième (53) parties du dispositif de raccord (57), ledit essuie-glace étant **caractérisé en ce que** la bascule (51) présente une forme d'épingle comprenant une zone supérieure (54) d'ouverture large pour permettre le passage de la première partie (49) du dispositif de raccord en forme de tête et une zone inférieure (55) d'ouverture étroite pour empêcher le passage de cette même première partie du dispositif de raccord.

2. Essuie-glace selon la revendication 1, **caractérisé en ce que** la première partie (49) du dispositif de raccord en forme de tête est apte à venir se loger dans la deuxième partie (53) du dispositif de raccord en forme d'embouchure.

3. Essuie-glace selon la revendication 2 **caractérisé en ce que** dans l'embouchure est disposé un joint torique.

4. Véhicule automobile équipé d'un essuie-glace selon l'une des revendications précédentes.

## Patentansprüche

1. Kraftfahrzeug-Scheibenwischer, der ein Scheibenwischerblatt (42) umfasst, das auf einem Scheibenwischerarm (41) anhand eines Arm-Blatt-Verbinders angelenkt ist, der einen ersten Teil (43), der fest mit dem Arm (41) verbunden ist, und einen zweiten Teil (44), der fest mit dem Blatt (42) verbunden ist, und eine Spritzvorrichtung (47) für Waschflüssigkeit hat, die auf dem Scheibenwischerblatt eingerichtet und über eine Anschlussvorrichtung (49, 53, 57) mit einem Beförderungskanal (46) für Waschflüssigkeit verbunden ist, der sich mindestens zum Teil entlang des Scheibenwischerarms erstreckt, wobei die Anschlussvorrichtung in den Arm-Blatt-Verbinder eingebaut ist, um die Spritzvorrichtung automatisch an den Beförderungskanal beim Anschließen des Scheibenwischerblatts auf dem Scheibenwischerarm anzuschließen und die Spritzvorrichtung automatisch von dem Beförderungskanal beim Abstecken des Scheibenwischerblatts von dem Scheibenwischerarm zu trennen, wobei die Anschlussvorrichtung (57) einen ersten Teil (49) umfasst, der fest mit dem in den ersten Teil des Arm-Blatt-Verbinders integrierten Arm verbunden ist, und einen zweiten Teil (53), der fest mit dem Blatt verbunden ist, der in den zweiten Teil des Arm-Blatt-Verbinders eingebaut ist, was die Anschlussvorrichtung fest mit dem Arm-Blatt-Verbinder (43, 44, 45, 51) verbindet, und wobei der erste Teil (43) des Arm-Blatt-Verbinders eine Öffnung (45) umfasst, und der zweite Teil (44) des Arm-Blatt-Verbinders mit einer Wippe (51) versehen ist, die geeignet ist, in der Öffnung positioniert zu sein, um die Verbindung zwischen dem Arm (41) und dem Blatt (42) sicherzustellen, wobei die Wippe als Riegel des ersten (49) und zweiten (53) Teils der Anschlussvorrichtung (57) verwendet wird, Scheibenwischer **dadurch gekennzeichnet, dass** die Wippe (51) eine Nadelform aufweist, die eine obere Zone (54) mit großer Öffnung umfasst, um das Durchgehen des ersten Teils (49) der Anschlussvorrichtung in Kopfform zu erlauben, und eine untere Zone (55) mit schmaler Öffnung, um das Durchgehen dieses ersten Teils der Anschlussvorrichtung zu verhindern.

2. Scheibenwischer nach Anspruch 1, **dadurch gekennzeichnet, dass** der erste Teil (49) der Anschlussvorrichtung in Kopfteilform geeignet ist, sich in den zweiten Teil (53) der Anschlussvorrichtung in Mündungsform einzufügen.

3. Scheibenwischer nach Anspruch 2, **dadurch gekennzeichnet, dass** in der Mündung eine O-RingDichtung angeordnet ist.

4. Kraftfahrzeug, das mit einem Scheibenwischer nach einem der vorhergehenden Ansprüche ausgestattet ist.

## Claims

1. A motor vehicle windshield wiper comprising a windshield wiper blade (42) hinged onto a windshield wiper arm (41) by means of an arm/blade connector including a first part (43) integral with the arm (41) and a second part (44) integral with the blade (42), and a washing liquid spraying device (47) that is arranged on the windshield wiper blade and connected by means of a connecting device (49, 53, 57) to a washing liquid delivery channel (46) that extends at least partially along the windshield wiper arm, in which the connecting device is built into the arm/blade connector so as to automatically connect the spraying device to the delivery channel when connecting the windshield wiper blade onto the windshield wiper arm and so as to automatically detach the spraying device from the delivery channel when disconnecting the windshield wiper blade from the windshield wiper arm, said connecting device (57) including a fist part (49) integral with the arm built into the first part of the arm/blade connector, and a second part (53) integral with the blade, built into the second part of the arm/blade connector, making the connecting device integral with the arm/blade connector (43, 44, 45, 51), and in which the first part (43) of the arm/blade connector includes an opening (45) and the second part (44) of the arm/blade connector is provided with a rocker (51) suitable to be positioned in said opening to ensure the connection between the arm (41) and the blade (42), said rocker is used as a lock of the first (49) and second (53) parts of the connecting device (57), said windshield wiper being **characterized in that** the rocker (51) is pin-shaped including an upper zone (54) with a wide opening to permit the passage of the head-shaped first part (49) of the connecting device and a lower zone (55) with a narrow opening to prevent the passage of this same first part of the connecting device.

2. The windshield wiper according to Claim 1, **characterized in that** the first part (49) of the head-shaped connecting device is suitable to come to be housed in the second part (53) of the connecting device in the form of an opening.

3. The windshield wiper according to Claim 2, **characterized in that** an 0-ring seal is disposed in the opening.

4. A motor vehicle equipped with a windshield wiper according to one of the preceding claims.
